# EUROPEAN PATENT APPLICATION

(11) **EP 1 391 818 A2**
(43) Date of publication of application: **25.02.2004**
(21) Application number: 03015475.1
(22) Date of filing: 09.07.2003
(51) Int. Cl.: G06F 9/44

(54) **Method, system and apparatus for an industrial framework based on integrated applications via adapters**

(30) Priority: 23.08.2002 US 227015
(71) Applicant: SIEMENS AKTIENGESELLSCHAFT, 80333 München (DE)
(72) Inventor: Thurner, Elmar, 90491 Nürnberg (DE); Zahorcak, Vladimir, 76351 Linkenheim-Hochstetten (DE)

(57) **Abstract**

The Industrial Framework universally integrates applications. An application domain model is mapped to the Industrial Framework unified model, containing external application data, functions and objects (having data and functions). The published data, functions and objects of the application domain model are accessed by any service and integrated application, thereby universally integrating applications to the Industrial Framework. Specific communication protocols used by different types of applications are mapped to generic Framework protocols, thereby allowing higher-level communication between any involved applications. A toolkit supports the development of Adapters that are created to universally integrate any of a predetermined type of application to an Industrial Framework. Within this toolkit, there is provided libraries having reusable starter source files for a new Adapter in which coding common to the Applications is previously provided. Applications are universally integrated into an Industrial Framework. A hierarchical object model of an Adapter with method calls is defined and published. The hierarchical object model includes data and at least one function of an external application coupled to the Industrial Framework. The function and data, and thus, objects in an object oriented domain are accessed from another application coupled to the Industrial Framework.

## Description

### BACKGROUND

### Field Of The Invention.

The present invention relates generally to a Method, System and Apparatus for an Industrial Framework, and, more particularly, to an Adapter and an Adapter Base for integrating applications into an Industrial Framework.

### Related Information.

Industrial Automation Engineers in the Digital Age create innovative computer processes to improve Manufacturing. The work horse of the Industrial Automation Digital World is a specialized processor, known in Industry as the Programmable Logic Controller (PLC). In the early days, programming and maintaining an Industrial Process controlled by a PLC was relatively straightforward. However, as the technology advanced - PLCs having more processor power and factory devices incorporating their own processors - it became necessary to integrate the production facilities into a network. However, computer networks, especially networks running critical applications, such as Industrial Automation applications, requires a great deal of engineering and maintenance effort.

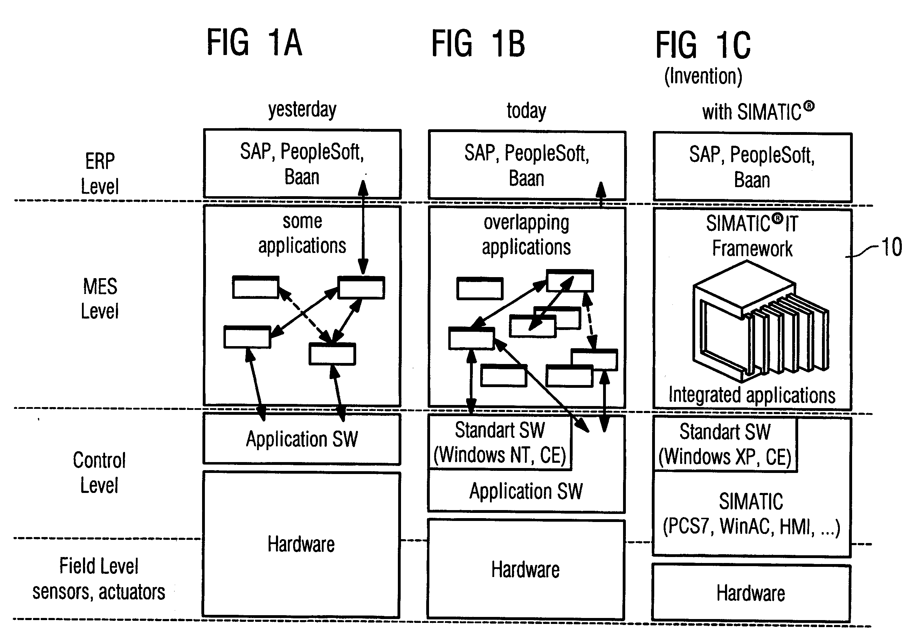

In order to meet customer demands and outpace the competition, manufacturers are ever striving to improve their production processes. This means that, to be successful in the digital age, manufacturers must continuously synchronize, coordinate and optimize their networks. In the past, and as shown in Figure 1a, manufacturers were required to manually program connections for each production process. This laborious practice was particularly problematic when new production processes and/or additional functionality were added to the factory floor, because the manufacturer was required not only to write a new application for the added process, but also was required to program connection software to connect and integrate the new application into the system. As shown in Figure 1a, the previous practice was also hardware intensive, requiring usage of specific hardware with vendor specific programming that provides a significant part of the production processes, and thus not very flexible. Moreover, only some of the applications resulted in being connected to the network, which is hardly ideal for full control of automation processes.

More recently, because of usage of standard operating systems (like Windows NT ™ or CE ™) the amount of hardware was somewhat reduced and a number of applications built on top of them had increased, thereby causing some functional overlapping. Although operating systems provide several standard interfaces for applications (ODBC, COM, file, XML, ...), the integration complexity is still very high (many applications = many different interfaces = complex integration). Furthermore, many legacy applications provide only very specific interfaces (like C-API). As a result, when it is desired to connect new applications to existing ones, a quasi-integrated system is developed that requires a high maintenance effort and extensive programming. What is lacking is a truly integrated Framework that integrates all applications, including legacy applications, such that all applications are integrated into the Framework and a base of connection is preestablished.

Heretofore, there has been no complete solution for component-based production management and application integration. There has been no solution for providing a Framework, through which connectivity to the applications is automatically established, maintained, and easily engineered. There is, further, no solution providing a Framework for easily modeling an application.

### OBJECTS & SUMMARY OF THE INVENTION

It is an object of the present invention to provide a Framework and, particularly, an Industrial Framework.

It is an object of the present invention to provide an Industrial Framework that integrates, through a common platform, applications.

It is an object of the present invention to provide an Industrial Framework that integrates, through a common platform, applications, including ERP, MES and Control applications.

It is an object of the present invention to provide an Industrial Framework that incorporates Reusable Objects.

It is an object of the present invention to provide an Industrial Framework that employs associations (relationship) between its Objects.

It is an object of the present invention to provide an Industrial Framework that employs Inheritance of its Objects.

It is an object of the present invention to provide an Industrial Framework that incorporates Extensible Objects.

It is an object of the present invention to provide an Adapter that is universally integrates Applications into a Framework

It is an object of the present invention to provide an Adapter that automatically establishes and maintain connectivity between Applications and a Framework.

It is an object of the present invention to provide an Adapter that publishes data and functions of Applications of a Framework.

It is an object of the present invention to provide an Adapter that publishes objects (having data and functions) of Applications of a Framework in the form of Reusable and Extensible Objects

It is an object of the present invention to provide an Adapter that publishes data and methods of Applications of a Framework that allow the methods to be extended.

It is an object of the present invention to provide an Adapter Base that includes tools and libraries for establishing and maintaining connectivity of Applications of a Framework.

In accordance with the foregoing objects, the present invention provides universally integrating applications to an Industrial Framework. To that end, an application domain model is mapped to the Industrial Framework unified model. The domain model may comprise external application data, functions and objects containing both data and functions, to the Industrial Framework. The mapped application data, functions and objects of the application domain model can be accessed by any other objects or services inside the Framework. Configurable data flows and work flows between objects provide then physical and logical (semantical) integration of all involved applications to the Industrial Framework.

In another aspect of the invention, a toolkit is provided for supporting the development of Adapters that are created to universally integrate any of a predetermined type of application to an Industrial Framework. Within this toolkit is provided type libraries having reusable starter files for a new Adapter in which coding common to the applications is previously provided. A work area is provided where the starter files and files from other applications are accessible and modifiable to create new files specific to a particular application.

### BRIEF DESCRIPTION OF THE DRAWINGS

- Fig. 1a: is a block diagram illustrating the prior art;
- Fig. 1b: is a block diagram illustrating the prior art;
- Fig. 1c: is a block diagram of the present invention;
- Fig. 2: is a more detailed block diagram illustrating the present invention;
- Fig. 3a: is a system diagram of the architecture of the present invention;
- Fig. 3b: is a block diagram of the architecture of the present invention;
- Figs. 4a-4c: are screen shots of the Workbench of the present invention;
- Figs. 5a, 5b: are block diagrams illustrating the application of the Adapter of the present invention;
- Fig. 6: is a block diagram of the architecture of the Adapter of the present invention;
- Fig. 7: is a screen shot of an hierarchical tree of the present invention;
- Figs. 8a-c: are block diagrams of the Object Model of the Adapter of the present invention;
- Figs. 9a-b: are block diagrams illustrating connecting to objects using connection points according to the present invention;
- Fig. 10: is a block diagram illustrating connection to objects using aggregation of classes according to the present invention;
- Figs. 11a-c: are screen shots illustrating subscribing to a State Machine using Workbench of the present invention;
- Figs. 12a-b: are screen shots illustrating a subscription and notification operation according to the present invention; and
- Fig. 13: is a flow diagram of an activation/deactivation procedure of the present invention.

The several drawings shall be described in more detail, wherein like reference numerals refer to same or similar elements.

### DETAILED DESCRIPTION OF THE PREFERRED EMBODIMENTS

The present invention is directed to an Adapter and, in addition, to an Adapter Base for an Industrial Framework. The discussion of the main points of the invention will first be discussed in the context of the Industrial Framework, as this is the supporting system in which the main invention is applied. A more detailed discussion of the Adapter and the Adapter Base will be thereafter provided.

The Industrial Framework 10 of the present invention, illustrated in Fig. 1c, provides integration and coordination of the components, which make up a manufacturing execution system (MES). The Industrial Framework implements and manages not only data communications between different functional components but also allows the user to model the way in which these components work together to achieve manufacturing goals.

Before engaging in a discussion of the Industrial Framework, it shall be appreciated that, while the present invention is described in terms of an Industrial Framework, the invention encompasses and is applicable to other types of Frameworks. A Framework is a software system, or sub-system that is intended to be instantiated. The instantiation of a framework involves composing and sub-classing the existing classes. A Framework for applications in a specific domain is called an application framework. It defines the architecture for a family of systems or sub-systems and provides the basic building blocks to create them and the places where adaptations for specific functionality should be made. In an object-oriented environment a framework consists of abstract and concrete classes. The Industrial Framework in the context of the present invention is but one type of Framework and may include other Frameworks, such as Telecommunications, ERP, Billing, etc.

With the Industrial Framework of the present invention, it is possible to operate, model / engineer, a system that comprehensively models both Production Operations and Information Flow. In more detail, the Industrial Framework is a collection of highly-integrated components designed to integrate the systems within each factory, standardize production across the entire enterprise and keep manufacturing processes aligned with supply chain activity. Thus, the Framework links and integrates the worlds of production and management with software, thereby creating effective communications and process synchronization and coordination throughout a plant or series of plants. At the same time, it eliminates the need for the costly and inefficient integration of individual IT solutions. The result is faster, more cost-effective operations.

It will be appreciated that the Industrial Framework 10 is a collection of well-integrated components that are designed to integrate the systems within each factory standardize production across the whole enterprise and align manufacturing processes with supply chain activity. Within this Industrial Framework, the Server 12 is the component that, amongst others, provides data management and application integration. With the Industrial Framework Server, the data structures within adapted applications are graphically mapped in order to literally provide "any information anywhere at any time".

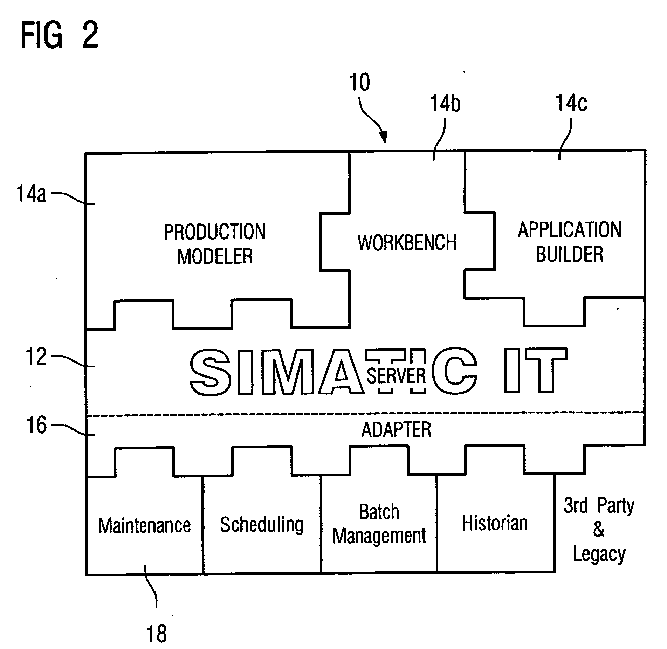

The Industrial Framework offers a component based approach in which the functions required by a production management system are provided by Industrial Framework Components 14. That is, the Industrial Framework Components' function is to promote manufacturing functionality. The Components of Industrial Framework are illustrated by the block diagram of Figure 2.

As will be appreciated from Figure 2, the Industrial Framework, together with its components, provides the tools for modeling and integration of operations and data. Coupled to the Server are components, which are provided with the Industrial Framework and comprise the main tools provided therewith for application by the user. Amongst these are the Production Modeler 14a that models production, the Workbench 14b that provides a work space for the user to access, modify and create models and an Application Builder 14c that assists the user to create his or her own applications. In order to couple to the applications, such as Maintenance, Scheduling, Batch Management, Historian, and 3^{rd} Party Legacy, for example, to Industrial Framework, there is provided an Adapter 16. As will be explained in more detail, the Adapter, and its Adapter Base, provide automatic connectivity of Applications 18 to the Industrial Framework, thereby eliminating the problems of the previous methods.

The Industrial Framework, together with its components, provides Manufacturing Application Integration. This can be seen in Figure 1c, which compares the previous techniques to the Industrial Framework of the present invention. Thus, the Industrial Framework integrates and synchronizes processes, allows the business to get a handle on its business processes, thereby meeting the challenges faced by both production and IT.

On the Production & Modeling side, the Industrial Framework Production Modeler 14a is responsible for the overall management of the plant. It controls and improves plant activities by coordinating and synchronizing the machines, people, and applications connected to the Industrial Framework. The Production Modeler is used for project modeling, engineering and operations and, to that end, executes production operations. Encapsulated components and integration scenarios are stored in reusable libraries for rapid prototyping and the establishment of corporate manufacturing standards.

In terms of IT tasks, the Industrial Framework Server handles data management and manufacturing application integration. The data structures within adapted applications are graphically mapped to provide complete information anywhere, at any time. Unlike most data-integration tools, which generate custom one-to-one bridges between components, the Industrial Framework Server manages a distributed, scalable and robust integration network. The Framework Server generates data diagrams, which establish relationships between components by graphically mapping their fields, as well as activity diagrams, which synchronize the information flow. To support the Server functionality, the present invention provides a set of engineering tools.

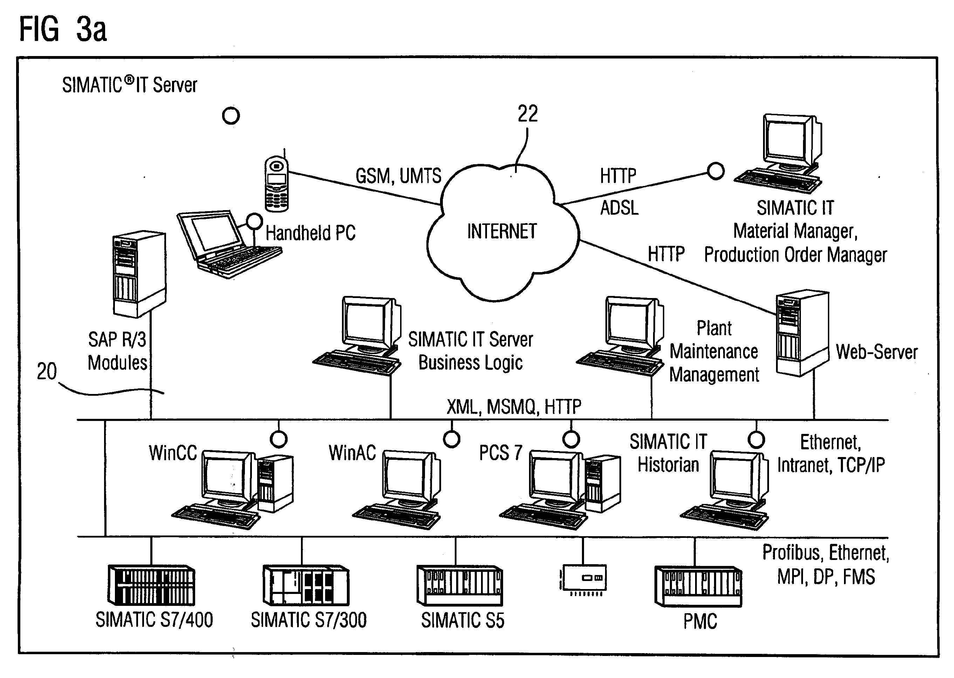

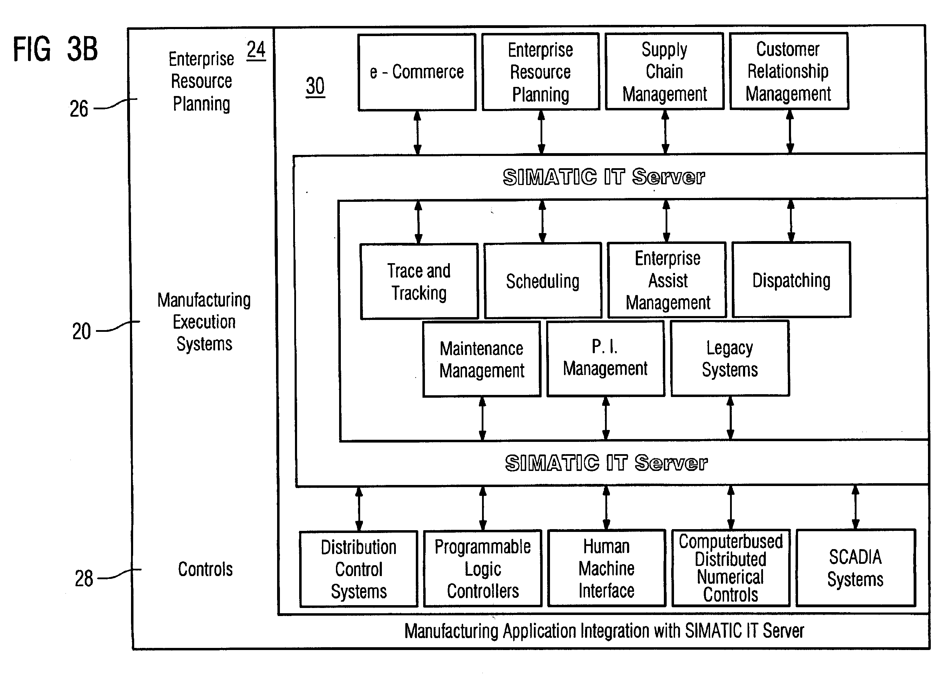

As will be appreciated from Figures 3a and 3b, the Industrial Framework of the present invention provides a flexible architecture 20 which is scalable, distributed and open, providing a true n-level architecture. It will also be seen from the Figures that the Framework has multiple data transports 22 including HTTP and MS Message Queuing, which could support remote access and control, such as through the Internet or through GSM, UMTS, for example. From the Figures, it is shown that the Framework supports both synchronous and asynchronous communication, thereby equipped to integrate any system.

As illustrated, HMI or GUI devices are supported, lending declarative and graphical methods of modeling and making possible the execution of company-wide information flows. From the architecture it will be observed that the invention is inherently expandable, dynamically configurable and offers reusable solutions. As a complete integration method, the invention provides communication protocols that include Request & Response, Publish & Subscribe, or OPC-Style data access. In addition, the invention does not lose any of the advantages offered by the operating system architectures of old, by providing object-oriented integration architecture based on a generic object model.

Figure 3b illustrates the architecture in a block diagram, which, perhaps, better demonstrates the use of Adapters (commonly provided by the invention) for connecting Enterprise Resource Planning (ERP) 24, Manufacturing Execution Systems (MES) 26 and Control applications 28. The Framework can be thought of as providing three layers of connectivity. The Server provides the architectural backbone through which the each of the layers is in horizontal communication, particularly as between MES. As between layers, there is vertical integration, particularly linking control to the ERP systems.

It will be appreciated from Figure 3b, that the architecture of the present invention readily supports eCommerce applications 30. Indeed, as shown in Figure 3a, the Industrial Framework, in addition to connecting through Automation Networks, such as Profibus, also has the option to connect through the Ethernet, Internet, Intranet, TCP/IP, etc. In addition, the Industrial Framework provides connectivity through GSM and UMTS, or other wireless communication protocols.

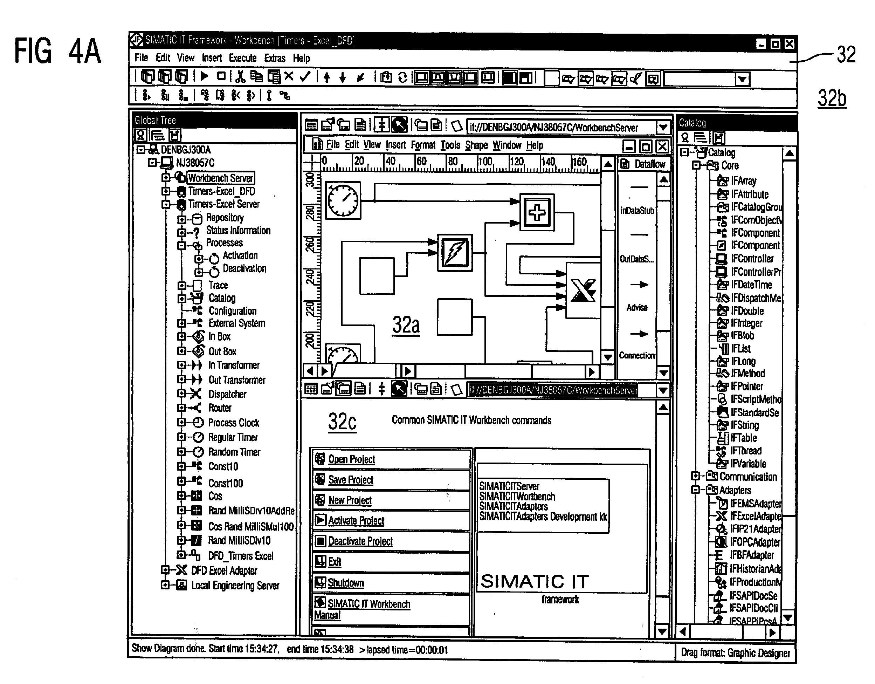

The Industrial Framework further provides a Workbench, as shown in Figures 4a-4c, which provides a graphical configuration 32 of distributed workflows and data flows as well as the design of business objects, mappings and project deployments. The Workbench provides an Integrated engineering environment in which a graphical configuration of distributed workflows and data flows are visually monitored and controlled. It also provides for the design of business objects and the design of runtime GUIs thereby truly establishing a universal browser from business level to plant floor.

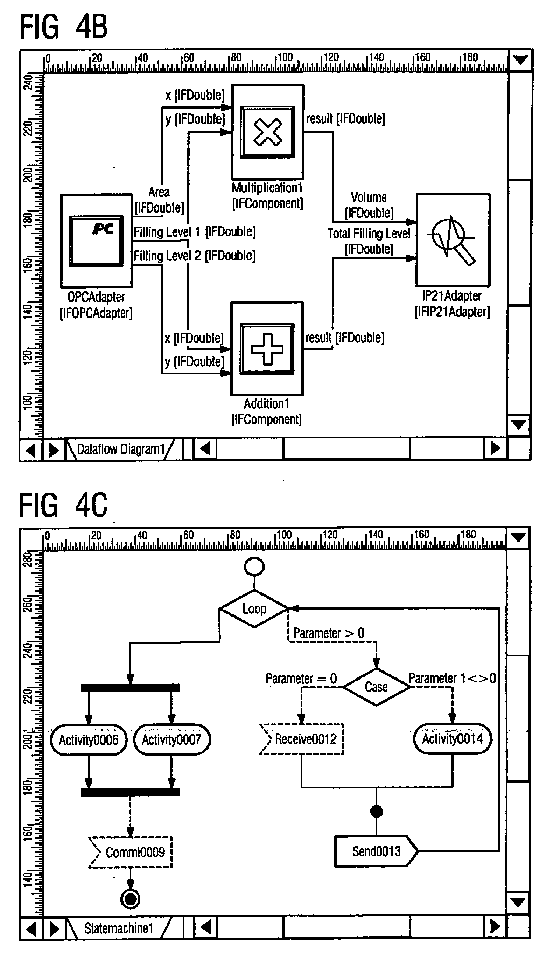

Now in more detail, the Workbench provides an integrated engineering environment whereby the integration scenarios are configured. Data structures are mapped from application to application (irrespective of their types or geographical locations) using Dataflow Diagrams, as shown in Fig. 4b, and communication is synchronized using State Machine Diagrams, as shown in Figure 4c. The Workbench contains a number of tools. An Object Designer provides graphical design of objects in a number of different views 32a, including Tree, Table, XML, and HTML views. A Data Flow and State Machine Designer 32b graphically displays a data flow and state machine and allows the user to design or modify existing data flows and state machines. A Graphical User Interface, GUI, Designer is provided for designing a GUI. There is also provided Script Editors (for example, VBScript, JScript). A command window 32c is provided for providing basic commands of the Workbench.

A number of functions can be executed using the Workbench tools provided by the present invention. Configuration and integration of Adapters for data flows, for example, OPC to SAP connection. Definition and testing of State Machine Diagrams, with debugging support such as a single step, is provided by these tools. Using these tools, the GUI Designer may be used to graphically engineer HTML-based thin Clients. Adapters provide the Industrial Framework Server with access to all the data available within the distributed system. The web-based GUI delivers any part of this data to the web, and Active Server Pages enable the remote control of Industrial Framework components.

It shall be appreciated that the use of ERP (Enterprise Resource Planning) of the present invention compliments SCM (Supply Chain Management) systems. Particularly for Industrial Companies, the present invention is useful for implementing SCM for E-Manufacturing. E-Manufacturing is the process of integrating all manufacturing relevant applications and activities, allowing enterprise-wide communications and coordination. E-Manufacturing based on the Industrial Framework closes the gap between the optimization of plant and supply chain. With the present invention complex plants can be operated efficiently and production processes are synchronized with supply chain activities. The result is more flexibility, higher efficiency, faster delivery - and a crucial competitive edge for the company.

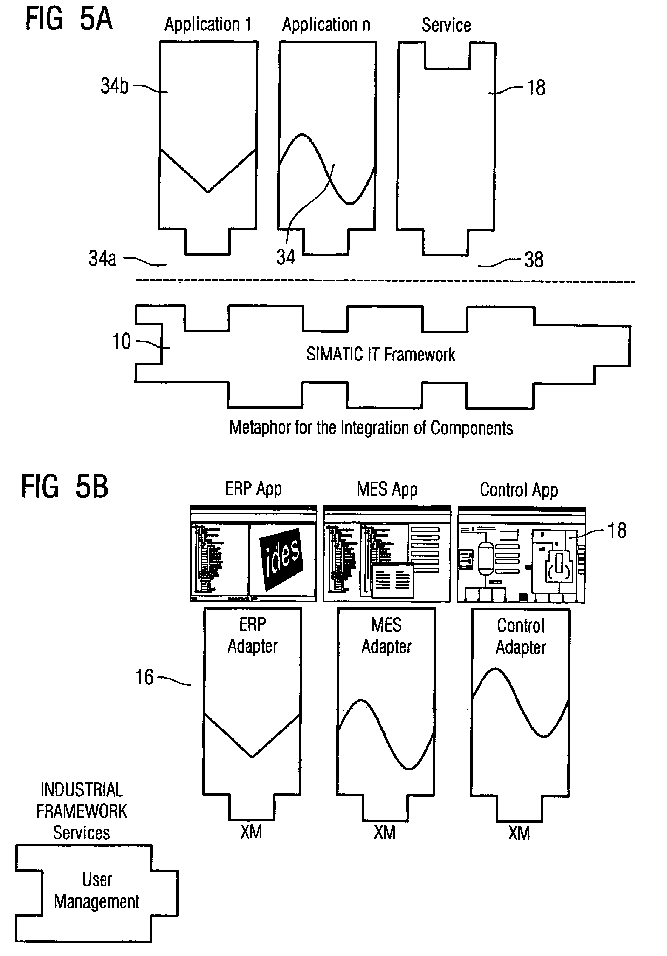

Now that the fundamental concept of the Industrial Framework has been described, we turn our attention particularly to the Adapter 16 of the invention shown in Figures 5a and 5b. In general, the Framework Adapter enables standardized and configurable connection 34 of Applications 18 to the Industrial Framework 10. This allows the application's functions and data to be configured and mapped. For this purpose, the Industrial Framework Adapter, in one aspect of the invention, works together with the Workbench. In addition, and as explained in more detail later, the invention further provides an Industrial Framework Adapter Development Kit which provides additional supporting applications, such as a Wizard that assists in building new Adapters.

The Adapter provides a standard and configurable integration of applications to the Industrial Framework. That is, Adapters integrate applications throughout the company and enable vertical and horizontal integration. The Adapter encapsulates applications and allows their data and functions to be used within the Industrial Framework. Adapted applications of any type can, thus, be configured and integrated using, for example, the graphical tools provided by the Workbench.

With the Adapter of the present invention, the Industrial Framework is truly a global software integration management system for Manufacturing Application Integration (MAI). It integrates a variety of Siemens AG or Third-Party MES components, which correspond to ERP systems and control systems. Therefore, it is an effective Industrial Framework for building Manufacturing Execution Systems (MES) solutions. Integrating applications primarily means mapping application domain models to the Industrial Framework's model. Such mapping can be illustrated by using the metaphor of Lego™ building blocks 36, as shown in Figure 5a. Each Application 1..n 18 can be set into place on the Lego™ plate 38, i.e., the Industrial Framework, with the help of a special Lego™ block, i.e. the Application's Adapter, which seamlessly fits onto the Lego™ plate at one end 34a and perfectly adapts the application's model at the other 34b.

As shown in Figure 5b, it will be appreciated that the Adapter of the present invention seamlessly adapts applications of various types, including Enterprise Resource Planning Applications (ERP), Manufacturing Execution Systems (MES) and Control Applications, for example. In one aspect of the invention, the Adapter of the present invention instantiates an Adapter for each particular application that adapts the ERP, MES or Control Application to the Industrial Framework, thereby providing complete integration.

The Adapter of the present invention includes, at least, the following functions. The Adapter provides Data Publishing, so that any application not only has access to functions of other applications, but also publishes the function in such a manner that allows the function to be extended, such that the extended function can be saved and added to a library for reuse. Thus, another feature of the Adapter is that it provides access to functions. There is also provided schema mapping for mapping schemes of one or more applications. Further, there is provided protocol conversions for converting protocols. In addition, the Adapter provides unification of models.

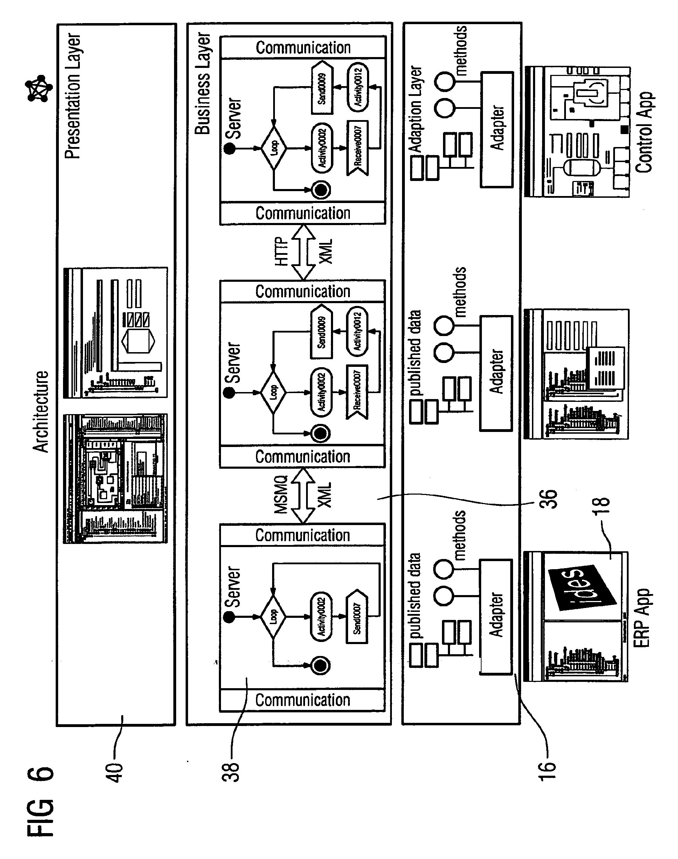

Before turning to the specifics of the methods of the Adapter that enable the aforementioned functions, a better understanding of the Adapter features shall be appreciated from the block diagram shown in Figure 6. As shown, the Adapter layer provides an instantiation of an Adapter 16 for each Application 18 on the application layer to interface to the Servers on the Business Layer, thereby forming the foundation of the Industrial Framework. As shown, the Adapter publishes data, and/or methods 36, which are applied to, for example, a State Machine 38 of a Server 40.

The published data and/or method(s) are both accessible and extendible by other applications through the Industrial Framework. As shown, and in one aspect of the invention, the Adapter publishes the data and methods in an extensible format, such as XML that can be easily transported via MSMQ or HTTP, and other known and future communication means. The code making up the data and/or methods is modified by another application, or user of the other application, connected to the Framework using, for example, a GUI in the Presentation Layer (e.g. Workbench), heretofore described. The objects so extended are then stored in a Library and, therefore, are reusable. This is referred to as Inheritance.

Attention is now directed to the software methods of the Adapter that enable the aforementioned features. A discussion of any software implementation begins with a definition of the program, or application. In terms of a software definition, therefore, the Adapter is a special Industrial Framework software component, which connects the Industrial Framework to an external application, e.g. SAP R/3 or the like, or an external system, e.g. a file system, and permits access to functions and data of the aforementioned application or system. While the description of the present invention makes reference to particular software applications, programming languages, libraries, naming conventions, etc., of course, the present invention is not limited thereto and may be implemented by another, equivalent, application, programming language, library or naming convention, which, perhaps, has yet to be developed, but which is equivalent.

Concretely, the services included as part of this software definition are to provide information about its implemented functions, existing objects and data structure, as well as those of its external application. Within the definition of services, there is also provided a map of the external application's data and functions to Industrial Framework Objects. There is also defined a service that provides access to both its own and the external application's data and functions. Further, the definition of services calls for supporting the connection of objects within the Industrial Framework. Providing basic operating services such as stating version/state information regarding itself and the external application is also supported by the software services, informing whether the external application is installed, and visualization and monitoring of both itself and its external application.

In addition to these services supported by the Adapter (and instantiations thereof), an Adapter may provide additional services. Together with its applications, the Adapter provides a base of services, which are referred to herein as the Adapter Base. An Adapter Base method is provided and is defined as the base class of all Adapters and part of the Adapter Development Kit. It is recommended that, when implementing the services, an Adapter programmer should respect the common Adapter architecture and the principles of the Adapter Base.

The definition of the present invention recognizes two main categories of Adapters. First, Data Access-Oriented Adapters refer to the category of Adapter whose external application(s) are tag-oriented. Tag-oriented means that the complex objects of the application are aggregated from more simple data objects, i.e., the tags. Clients of these Adapters do not prefer to access these simple data objects one by one, but in a group. The Adapter Development Kit supports this functionality by means of its Data Access Server and its Data Access Group. Notably, Adapters for control-level applications are typically tag-oriented. The other category of Adapter, Message-Oriented Adapters, comprise external applications that have no fixed object model, e.g. applications of the Enterprise Resource Planning (ERP) level. These Adapters use high-order business logic or business content to map particular integration sequences.

Here now, is set forth a description of the important blocks comprising the Adapter of the present invention. Of course, the Adapter is not so limited to this set of functions and, for that matter, could comprise any single function of any combination thereof.

Accessing the functions and data and, thus, the objects in an object-oriented world is provided in, at least, two ways. The first, is by defining and publishing an hierarchical object model that can be read or written with simple method calls and, the second, by declaring a high-order functional interface.

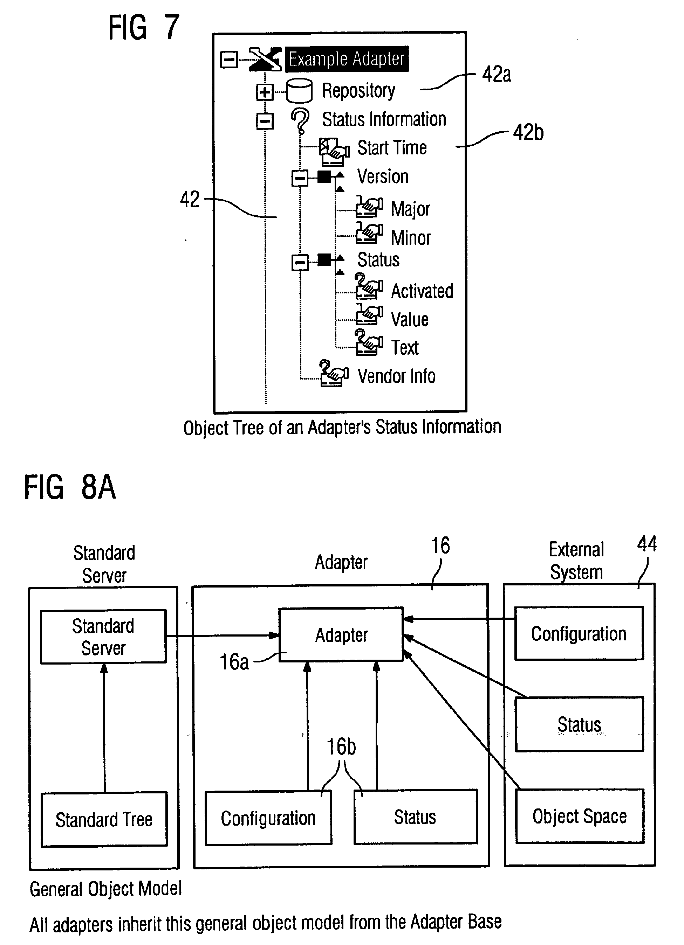

The object model of an Adapter is published as an hierarchically-organized tree . In the Adapter's context shown in Figure 7, the root of the tree 42a is the Adapter itself. The sub-objects 42b of the Adapter are inserted statically for the entire runtime of the Adapter or dynamically. They are inserted into the tree under the Adapter and have a fixed meaning. In other words, their name and their position in the tree identifies these objects. In the Figure, as an example, the partial tree of an Adapter (in particular the Adapter's status information) is shown. Thus, what is provided is the Object Tree of an Adapter's Status Information.

To declare a high-order functional interface, an Adapter maps the classes of its application to the Industrial Framework objects. In addition, an Adapter implements classes with semantically more sophisticated interfaces, if necessary. The methods of objects of these classes, as well as instances of common Industrial Framework objects, are in this manner accessed throughout the Industrial Framework.

There is provided, at least, two different techniques for accessing an Adapter's objects. With COM interfaces and techniques, an Adapter's Objects are accessed primarily for internal implementation. They are used for local access in the Adapter's own process (in process). If an Adapter implements a class with semantically more sophisticated interfaces, this class is implemented as an ATL COM class, according to the invention. To continue, the class declares its methods in a Dispatch-Interface, which provides a way to expose and access objects within an application. This interface can be derived from an Industrial Framework interface. Data of the class, which should be externally visible or persistent, uses pointers to an Industrial Framework interface. In the other technique, an Adapter aggregates and uses objects provided by the Industrial Framework's communication system, through the implementation of message boxes. More particularly, these objects map the messages onto the Adapter's COM interface.

Figure 8a shows the composition of a base Adapter from which all Adapters inherit a common structure. Here, there is illustrated an Adapter 16 comprising an Adapter class 16a and aggregated objects 16b. Aggregated objects include, for example, the configuration and status of the Adapter. Of course, the configuration of the Adapter can differ from one application to another as it describes the Adapter's specific deployment. The configuration of the external system 44 shown enables the Adapter to localize the external system. The configuration contains the name, the IP name (Internet Protocol name) or the symbolic name, of the computer on which the application is running. The object space aggregates the accessible objects of the external application. The Server provides access to all objects of the tree, so that the Adapter can use the objects it needs for any special task.

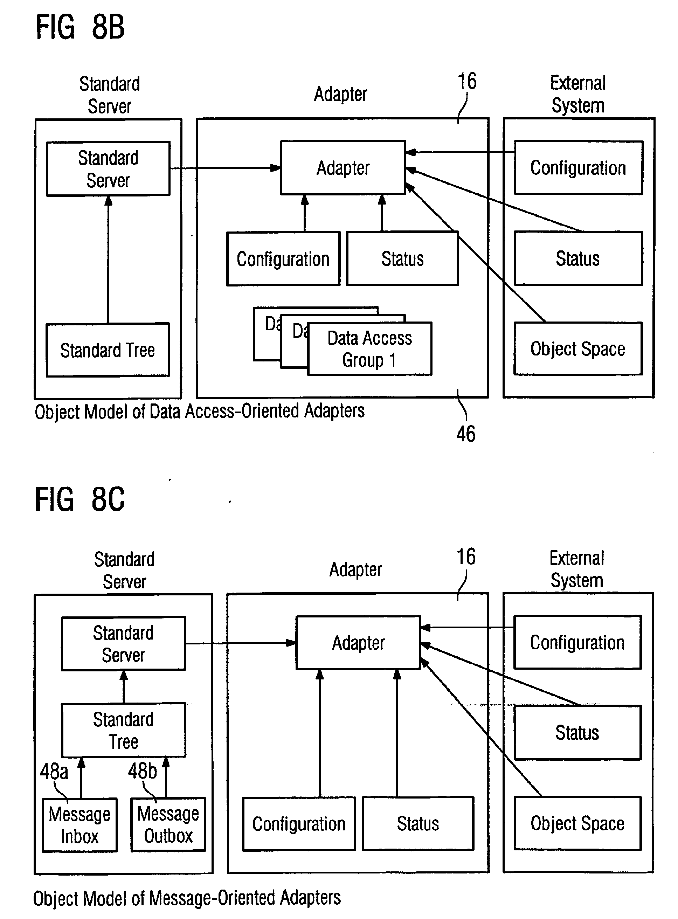

In addition to the general object model of an Adapter, a data access-oriented Adapter is provided, as shown in Figure 8b, which requires additional classes for its DataAccess Groups. In one aspect of the invention, the DataAccess Groups correspond to an OPC DA Server. It is possible in the invention that the classes can be programmed to have their own status if necessary.

There is also provided, as shown in Figure 8c, message-oriented Adapters, which do not need to implement additional classes. They employ objects of the tree, i.e. message inboxes 48a and message outboxes 48b. The message inbox buffers an arbitrary number of incoming messages and stores them for future processing. An inbox may issue notifications that new messages have arrived. A message outbox collects outgoing messages and defers their transport. The messages can be sent at any time in the future.

An Adapter, according to one aspect of the invention, is an ATL/COM EXE application. In this implementation, the application uses COM aggregation. Therefore, this particular implementation does not inherit from Industrial Framework C++ classes (with the exception of the Adapter Base class CIFAdapterBase, the base class of all Adapters); likewise, it does not aggregate them. It only uses the COM interfaces of Industrial Framework classes. Microsoft Visual C++ 6.0 of Microsoft Visual Studio is recommended. To program an Adapter, the Industrial Framework of the present invention is installed. It is recommended that Microsoft Visual C++ should be installed to support C++ objects and programming. As previously indicated, these are merely recommendations and the present invention is, by no means, limited to the particular programming language or compiler described herein.

With the Industrial Framework of the present invention, there is provided an Adapter Development Toolkit (ADK) which supports the development of Adapters. Within the ADK, there is provided type libraries and libraries of Industrial Framework components, source code of Adapter Base, header files, a Reference Manual, example Visual Studio C++ project, documentation. These tools are readily developed from this description by those skilled in the art, the details of which will not be belabored here. In addition, there is provided an Adapter Wizard that automatically creates an Adapter using a Wizard Template. It will be appreciated that the Adapter Wizard is similar, but only in concept, to a Wizard found in Windows™, in that it is a Dialog Box driven GUI that assists a user in creating an object. The Adapter Wizard here is facilitate programming imbued with novel aspects provided by the invention described herein.

The present invention an Adapter Wizard in order to an Adapter. The Adapter Wizard automatically creates an ATL project including an ATL object for the Adapter. It creates a project with a set of starter files for a new Adapter in which the common coding has already been done. The Adapter Wizard is, in one aspect, a plug-in to Microsoft Visual C++. In this aspect, the Application Wizard File IFADAPTERWIZARD.AWX can be, for example, located in Visual Studio's template folder, where the Visual C++ Resource Templates and Custom AppWizards are installed. The actual steps provided by the Adapter Wizard shall be described together with the manual steps for creating an Adapter set forth below.

An important application provided by the invention is creating a new class. Here now is provided the procedure for creating a new class with the present invention. The first step is to activate the Adapter Wizard of the present invention, which will lead the user through the following steps. The Wizard may provide, for example, a series of dialogs for creating a New Class. For example, the Wizard may provide a ClassView pane, in which the users selects a project and the New Class option. A New Class dialog box would then be provided, for example, and the user selects Generic Class for field Class Type and enters the class name. The user would then have to change the header's pathname to the Adapter's INCLUDE directory. The Wizard could provide a window for this change. The Adapter Wizard inserts the new class with its header and its implementation file. The next step is to edit the header file to indicate the New Class. This could be done automatically according to the following example code which illustrates a virtual method overwritten with the following CIFExampleBase method.

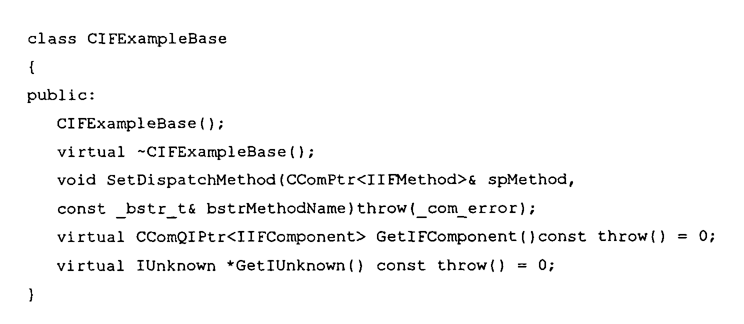

Then, the CPP file needs to be edited. With the method below, a method object is created and the method object is added to an object in the tree. The method then calls the Attach method of the IDispatchMethod interface which sets the method's name and adds it to the IUnknown interface of the calling object.

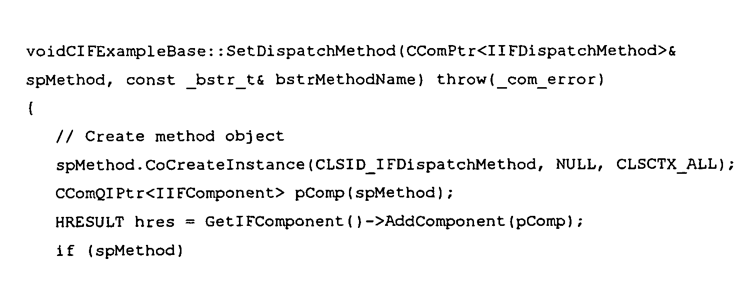

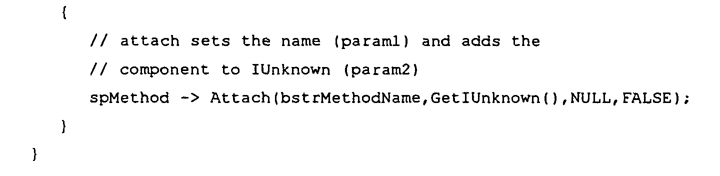

Next, the header file of a new class is included in the header file of the target Group as follows.

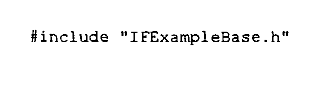

Thus, with the above processes, a new class is created.

Connecting to and disconnecting from an application is another important feature of the Adapter of the present invention that, in part, allows the invention to integrate with any application. To this end, the present invention provides the Connect method and the Disconnect method. They are inherited from the Adapter Base, the standard set of methods provided by the present invention, and may be modified in respect to a specific Adapter's needs.

The Connect method, first, initializes the application. As a next step, the method automatically builds the connections between the Adapter and the application. Upon connection, the method causes the Adapter to switch implicitly between an "Engineering" mode and a "Runtime" mode. The method then updates the Adapter's state to indicate that the Adapter is connected.

The Disconnect method, to begin with, breaks the connections between the Adapter and the application. Next, the method releases the application. Then, the method causes the Adapter to switch implicitly from "Runtime" mode to "Engineering" mode. Finally, this method updates the Adapter's state to indicate that it is disconnected.

Now, a concrete example of Connecting to an application, here a type library, is provided. A type library is similar to a C/C++ header file. It contains the interfaces, methods and properties that a Server is publishing. A Client can connect to the type library using the Adapter of the present invention and view the library with OLE/COM Object Viewer (OLEVIEW.EXE) provided with Visual C++ which is supported by the Workbench. It should be mentioned that such libraries can be found, for example, in Microsoft Office applications, i.e. Excel 97 offers the foreign object library EXCEL8.OLB. In any event, the first step to connect to the type library, is to import the application's interface into an Adapter's STDAFX.H, i.e. An example import program is provided.

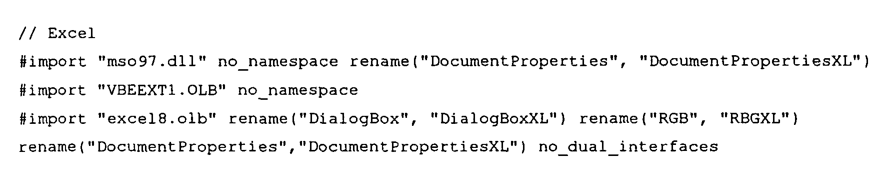

The next step is to insert private pointers to an application's interfaces in an Adapter's header file as follows.

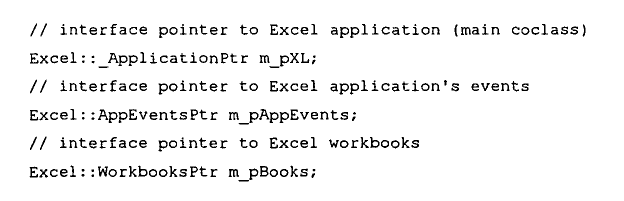

Then the Connect method in the Adapter's CPP file is edited, e.g., using the application's interface methods.

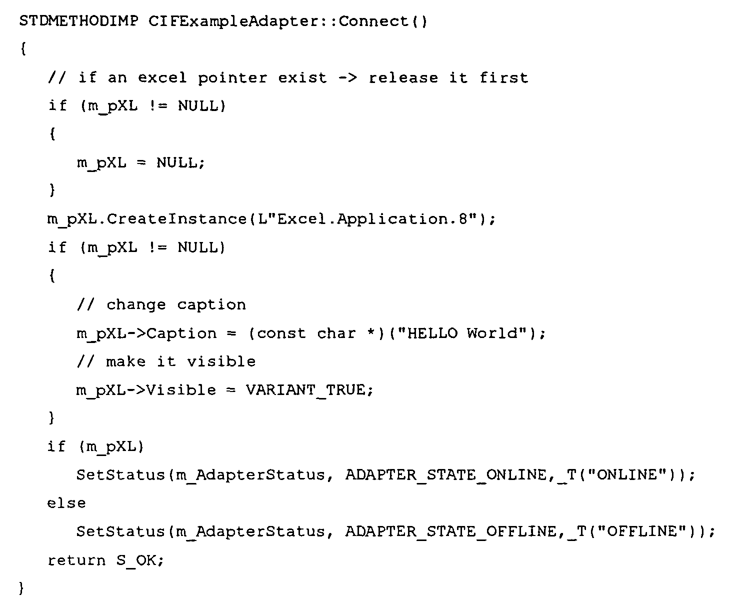

Then, the Disconnect method is edited so that it disconnects an Adapter from the Application, according to the following.

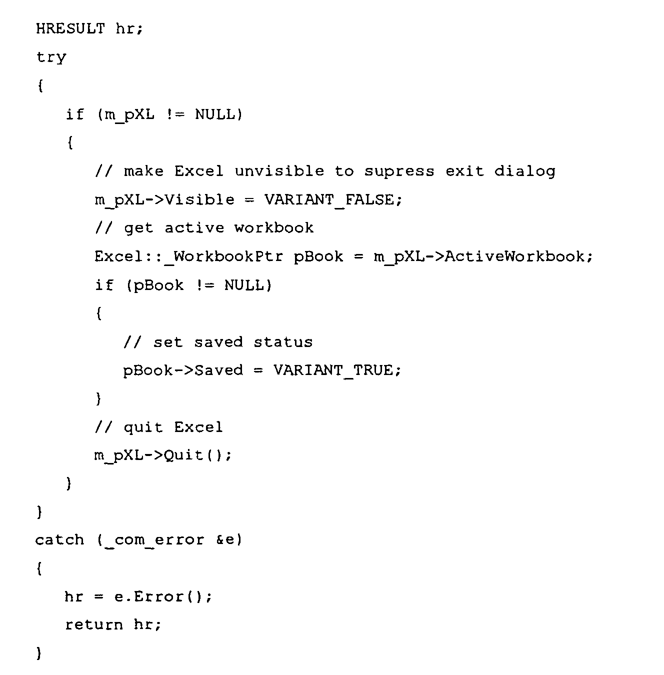

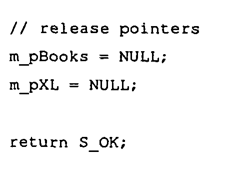

As another example of Connecting to an Application, here now is provided an example of connecting to a C-API (Application Program Interface), the set of commands that an application uses to request and carry out lower-level services performed by a computer's operating system. The following steps exemplify how to connect to the InfoPlus.21 API using the GUI and Adapter of the present invention.

In the Workbench already described, the user, for example first changes the project settings. To do this, the user selects Project Settings from a Project menu provided by the Workbench. Next, the user selects the Link tab and chooses Category General. Next, the user enters the API's library name in the Object/library modules edit field, i.e.setcim.lib. Next, the user selects from the Workbench Category Input and enters the library's path in the Additional library path edit field. The API's header file is then included in the concerned source file. The Header's Include Path is then added to an project settings. i.e. for IP.21 by using the following command.

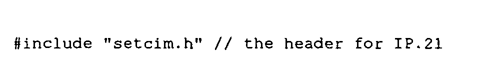

Next, the API's DLL files are copied into a directory, which can be accessed, i.e. a debug directory of a project or set an PATH system environment variable to the DLL's directory. This can be done automatically by the Wizard by editing the Connect method in the Adapter's CPP file using the API's methods, with the following code.

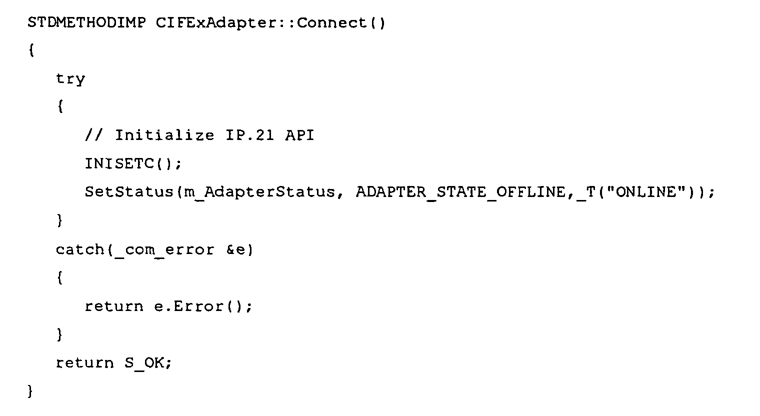

The Disconnect method is then edited so that it disconnects an Adapter from the Application, according to the following source code.

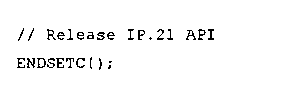

After creating an Adapter and adding the AdapterBase class functionality to it, the user may want to make some methods visible on an Adapter's interface. The following steps add a method without parameters to an Adapter's interface. In this example, the new method AddWorkbook adds new workbooks to the connected Excel application. The first step is to open an Adapter's header file and add a private member of type CComPtr<IIFDispatchMethod>, which may be done automatically by the Wizard with the following code:

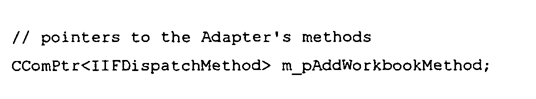

In the Adapter's CPP file, SetDispatchMethod is added in the FinalConstruct() method, according to the exemplified code.

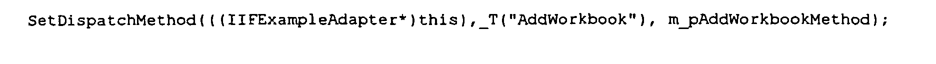

In the Adapter's CPP file, there is added a Release of an new method in the FinalRelease method, i.e.

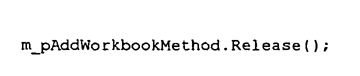

Now, returning to the Workbench ClassView Pane, the user selects the COM interface IIFExampleAdapter to add a new method. The method's name is inserted into the Add Method to Interface dialog box by the Wizard, which updates the IDL file automatically. The new method is entered in the CPP file. Here, for example, AddWorkbook adds exactly one workbook to Excel, if Excel is opened and connected.

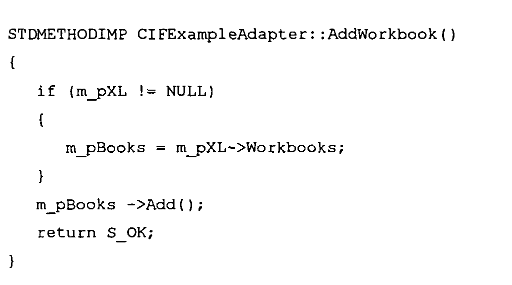

Some of the methods that the user may want to make accessible in the Framework may have input parameters. For example, the user may select to have a method that adds a given number of workbooks to Excel. The user does not need to implement any special code to make this input parameter accessible and changeable by the Workbench. An SetDispatchMethod call below in Adapter's FinalConstruct method recognizes the input parameter in the IDL file and publishes it in the Workbench. The user need only to modify an implementation of AddWorkbook, and it will add as many workbooks as specified by the parameter number. Otherwise, this can be done automatically by the Wizard using the following code:

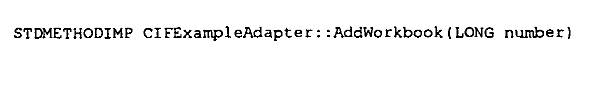

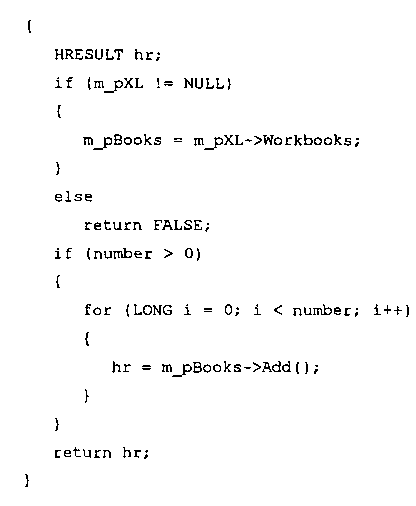

By default, SetDispatchMethod sets an parameter to zero. If the user wants to have another default value, the default value attribute in the IDL file is used, which allows the user to specify a default value for a typed optional parameter. Here, the default value is set to 1, so that one workbook is added by default upon executing AddWorkbook as follows:

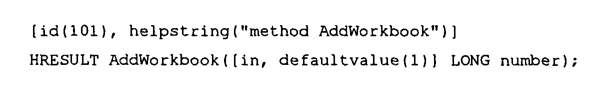

After creating an Adapter and adding the AdapterBase class functionalities to the Adapter, the user may want to make some variables visible on an Adapter's interface. A variable that is visible on the interface should be a pointer to an IIFVariable. To do this, a private member variable is declared in an Adapter's header file automatically as follows.

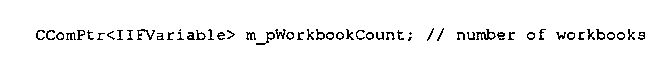

Then, a new variable in the FinalConstruct method is initialized in the Adapter's CPP file, as follows.

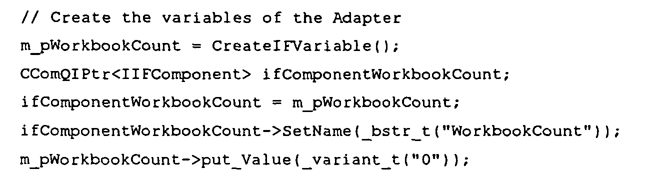

The next step is to publish the variable in an Adapter's external object space component of its object tree. A new variable is placed into the Adapter's object tree by adding an AddComponent method to the FinalConstruct method as follows.

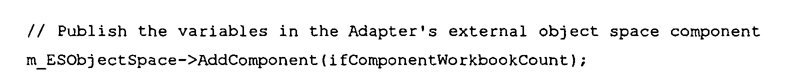

Another important task of the Adapter is to convert the naming schema of an external application to the naming schema of Framework and vice versa. For example, in the Framework, slashes are used as hierarchical separators in the Active Object Tree. Some external systems allow object names to have slashes. So if, for example, an object in an external system has the name "parent/child", Workbench interprets it as two objects: the object "parent" with its sub object "child". Another issue is the usage of different languages with their specific characters, as some special characters (">" , "?", "<", ":") are reserved characters in Framework.

Two methods are implemented which Encode/Decode an external system's object name to/from Framework's naming schema. The first step is to declare these two methods in STDAFX.H as follows.

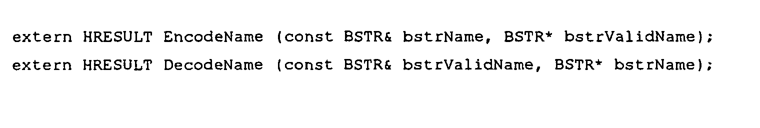

Then, these methods are implemented in STDAFX.CPP. Finally, these method calls are inserted wherever necessary in the source code.

After the new variable is published, the user may want to pass changes of the variable to an application or vice-versa. The user can do this by using events. Events can be generated by a user action - such as changing a value or pressing a key - by program code, or by the system, such as with timers.

If the user wants to pass changes affecting an Adapter's variables to an connected application, an Adapter acts as an event source. To that end, the user can use the Event Mechanism of the Workbench of the Framework to add an event to the kernel's event source, This is done by modifying the Framework's kernel event handler in regard to an event. The following code ensures that a changed value of an Adapter's variable be passed to the corresponding variable in an application.

_ In IFEXAMPLEADAPTER.H, an Adapter is derived from IIFEventSink, as shown in the method below.

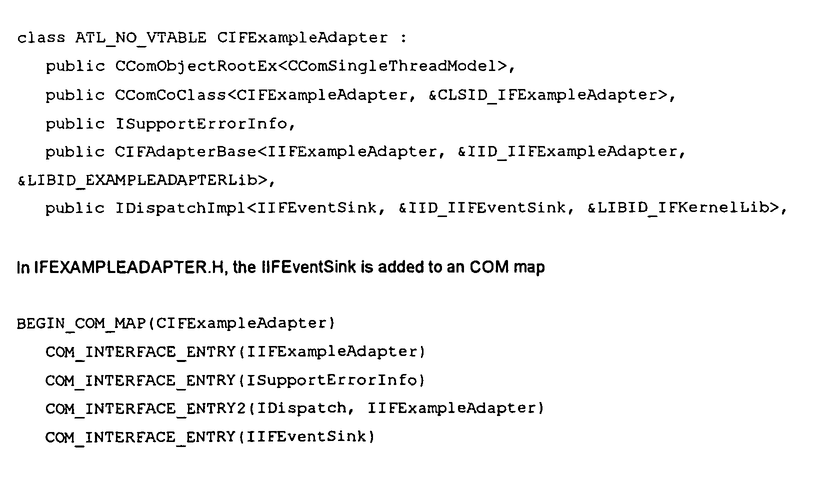

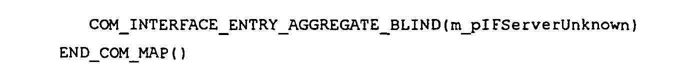

A method, i.e. AddVariable, is created where the Adapter's new variable is initialized. Use event handling is declared. The new variable's name is prepared and the variable with its name and a default value is created. A variable's name is prepared in the application, here the cell name in Excel. Next, a variable's identifier is set. Finally, the variable is added to an application and to an Adapter's external system object space and add the new variable as event source. The following code is an excerpt of the AddVariable method of the ExampleAdapter which executes the foregoing.

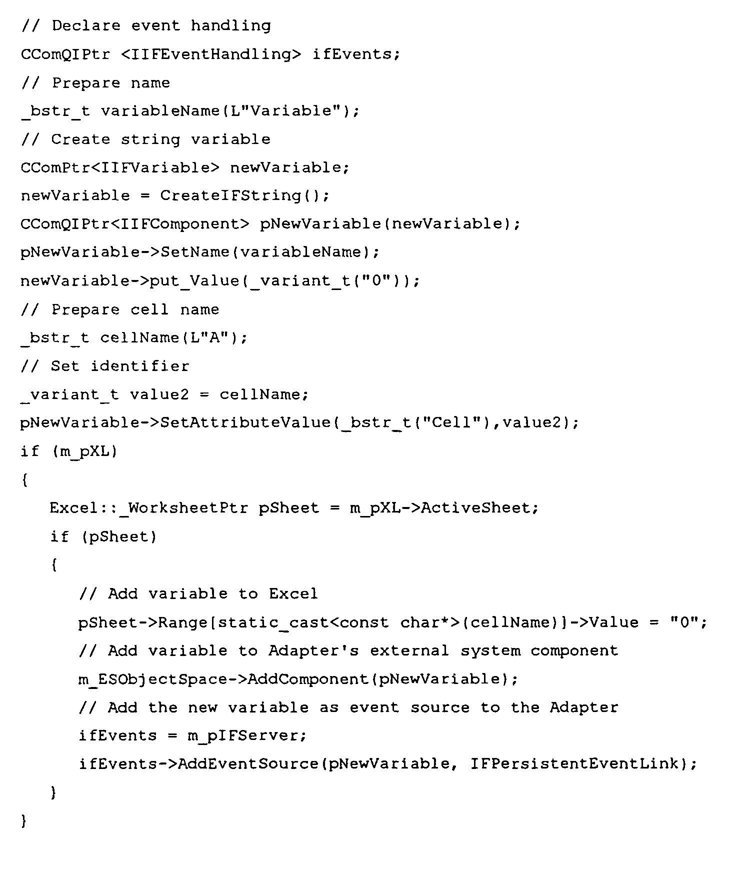

Still another feature of the Adapter is to act as an event sink of an external application. In order for this to occur, the Wizard automatically applies the class IDispEventImpl or the class IDispEventSimpleImpl of the following code:
The type library is imported for an external application, i.e. import EXCEL8.OLB in STDAFX.H as follows.

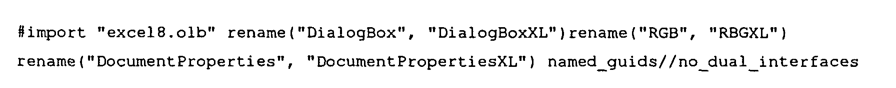

A class is derived from IDispEventSimpleImpl in an Adapter's header file as follows. An arbitrary positive integer is used for an first parameter. The second parameter identifies a class, the third is the pointer to the IID of the event dispinterface from where events are retrieved.

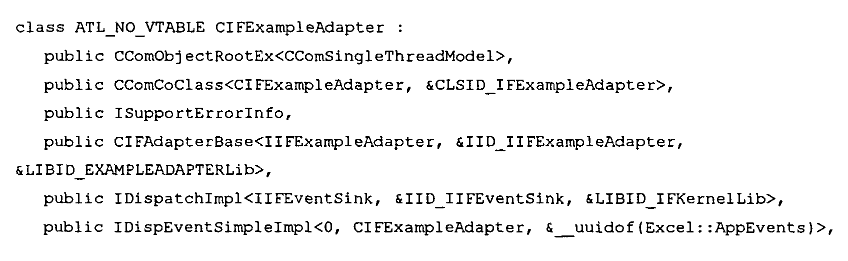

An event sink map is declared in an Adapter's header file. Entries to the event are added to sink map. In an SINK_ENTRY_EX macro the second parameter identifies the dispatch interface, the third specifies the event and the last is the name of the event handling function. So in this example, as soon as a new workbook is added to an connected Excel application, the Adapter's method OnNewWorkbook is called as follows.

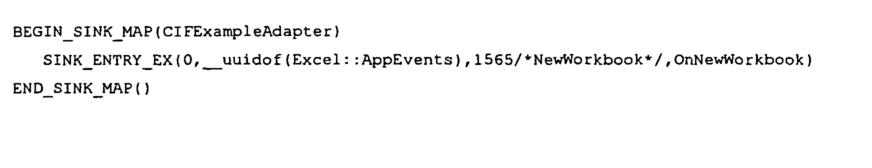

The next step is to implement a method that will advise (or unadvise) all connection points at the proper times. Such advising should be performed before any communication between the external Client and an object can take place. A member pointer is declared to the external application's event interface in your Adapter's header file as follows.

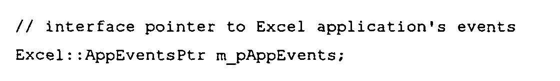

An example of implement advising, i.e. in Connect method, is provided.

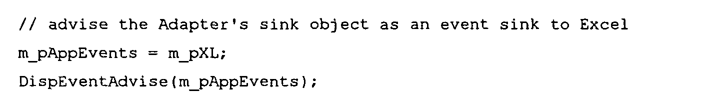

An example of implement unadvising, i.e. in Disconnect, is shown below.

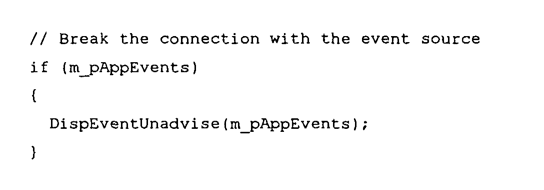

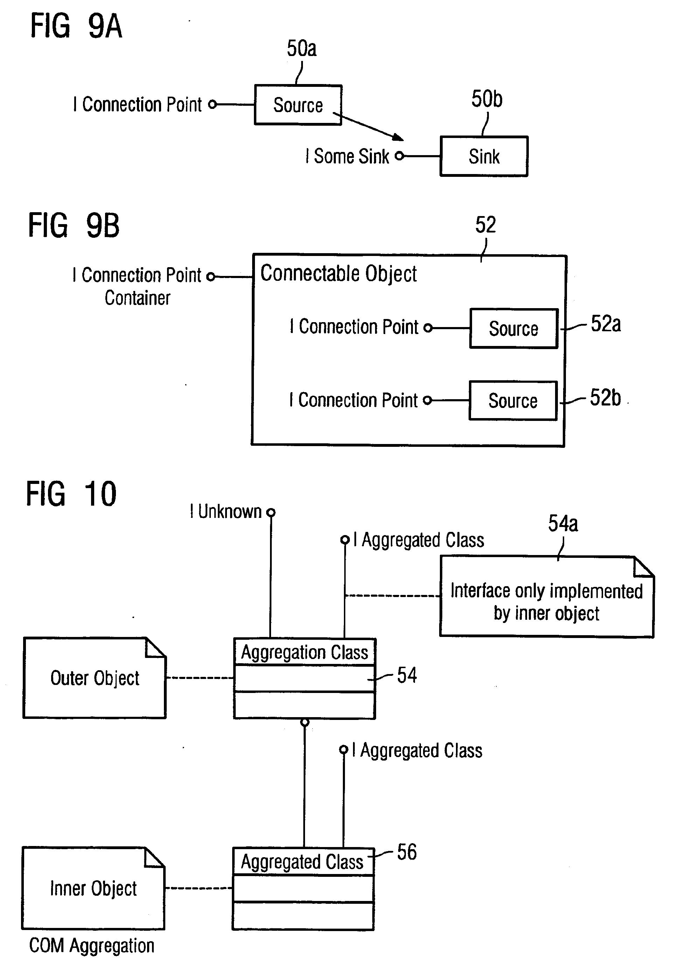

Furthermore, the Adapter of the present invention is capable of making calls to an external application and fire events. To do this, the Adapter uses a connection. As shown in Figure 9a, a connection has two parts: the object making calls to the methods of a specific interface, called the source 50a, and the object implementing the interface, called the sink 50b. A connection point is the interface exposed by the source. Through a connection point interface provided by the ATK, a pointer to the sink interface is passed to the source object. This pointer provides the source with access to the sink's implementation of a set of member functions. As shown in Figure 9b, a connectable object 52 creates and manages one or more connection point subobjects52a, 52b, which register and revoke callback interfaces. A connectable object implements the Connection Point Container interface described below.

In order for an Adapter to fire events using the connection point protocol, the Adapter should be a connectable object. To do this, the Adapter implements a Connection Point Container interface. For this, an Adapter's header file is edited according to the following steps. An Adapter is derived from the ATL template class in the header file. The template parameter is an Adapter class. A COM INTERFACE ENTRY macro is added to the Connection Point Container interface. The ATL implementation uses a connection point map, which provides information about the connection points. Therefore, an empty connection point map is added by inserting the Begin and End Point macros using an Adapter's class name as the parameter. The Adapter is now ready to implement connection points. This means that connection points can now be added in an connection point map. The Adapter's coclass descriptions should be updated according to the following.

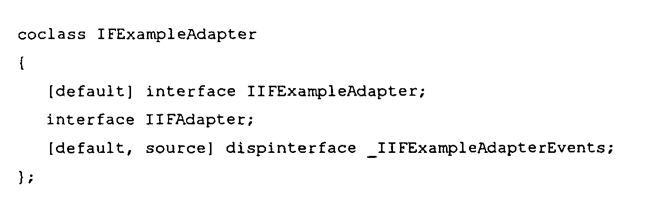

The final step, to make everything function, is to fire each event at the appropriate time. This may be application specific. Here, the invention fires the new event using the method CreateOwnEvent, and the Framework specific events method CreateKernelEvent. These methods are inserted in an Adapter's interface and edited as follows. The CreateKernelEvent calls the PrepareAndFireEvent method of Framework's event handling which takes an event ID and an event value according to the event ID as parameters.

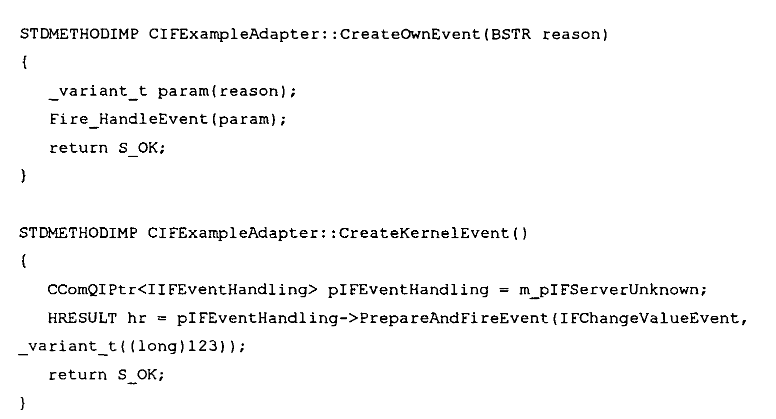

A Client can now call the Adapter to fire events via connection points.

As previously described, a data access-oriented Adapter is also provided.

These Adapters implement DataAccess especially because their external applications are tag-oriented. Tag-oriented means that the complex objects of the application are aggregated from simpler data objects, the tags. The DataAccess functionality permits efficient and flexible reading and writing of data between an application and a process-control device. OPC DataAccess, which is used by the Framework, supports a Client/Server architecture. Communication between Client and Server may be, for example, COM/DCOM-based.

Now in more detail, Tags are simple data objects", the properties of which can be exchanged between Server and Client. Their properties can be dynamic (value, state, timestamp) or static (short name, path, dimension, comment, upper and lower threshold). In an Adapter, a tag is a placeholder/proxy of an external-application object. In an external application, the tags can be found either listed or organized within a hierarchical tree (namespace). The Adapter of the present invention provides a functionality that indicates the information whether a tag is readable, writeable or read/writeable. Clients of these Adapters do not prefer to access these simple data objects one by one, but in a group. The Adapter Development Kit supports this functionality thanks to the DataAccess Server and its DataAccess Group methods described below.

To implement the interface of the DataAccess Server in an Adapter, the user can use Workbench of the present invention to modify Visual Studio's™ Implement Interface Wizard functionality. In the ClassView Pane of the Workbench, the user, selects an Adapter class and selects to Implement the Interface. The Workbench then provides a Browse Type Libraries dialog box. Within which may be selected the ADK's library. The Workbench then simply opens the library for browsing. The Adapter Wizard then modifies the Adapter's header file automatically.

In order to Implement an Interface for a DataAccess Group, the user can again use Workbench. A DataAccess Group is a group/list of items that are read and written together. Such items do not subscribe singularly, but instead, are viewed as a whole when a change takes place. A DataAccess Group's read and write access is synchronous. And, furthermore, an Adapter can have more than one DataAccess Groups at the same time. To implement an interface for a DataAccess Group, first a new class is created according to the procedure already described. A new class should use COM aggregation of IFComponent, as it has to be inserted into the Active Object Tree like a normal IFComponent and thus needs its interface IIFComponent.

Figure 10 illustrates the principle of COM aggregation in the Framework of the present invention. AggregationClass 54 aggregates the interface of the aggregated Framework class. Thus, the interface methods 54a of AggregatedClass 56 are also available in AggregationClass.

If it is desired to publish a method of the DataAccess Server, i.e., the method CreateGroup, described below, is automatically provided, which adds a new group, i.e., IFExampleGroup, to an Adapter. Normally, a DataAccess Server acts only as a tag provider for other applications (e.g. an OPC Server). Here, the method is provided to enhance the look and feel of DataAccess Groups in Workbench. Implementing the method that sets the name of a new DataAccess Group and calls a private method (here InternalCreateGroup) that creates a group and that will also be used by the DataAccess Server is illustrated below.

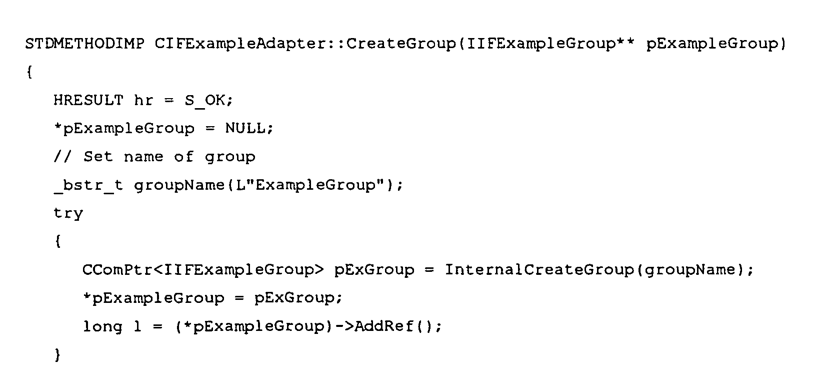

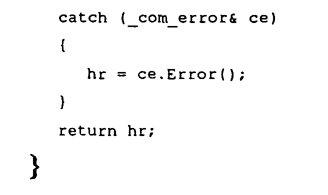

The next step is to declare and implement the private method InternalCreateGroup in an Adapter class. This method creates a new instance of a DataAccess Group with a given name and inserts it into the Adapter's active object tree in the object groups of the external system. The new object is subscribable.

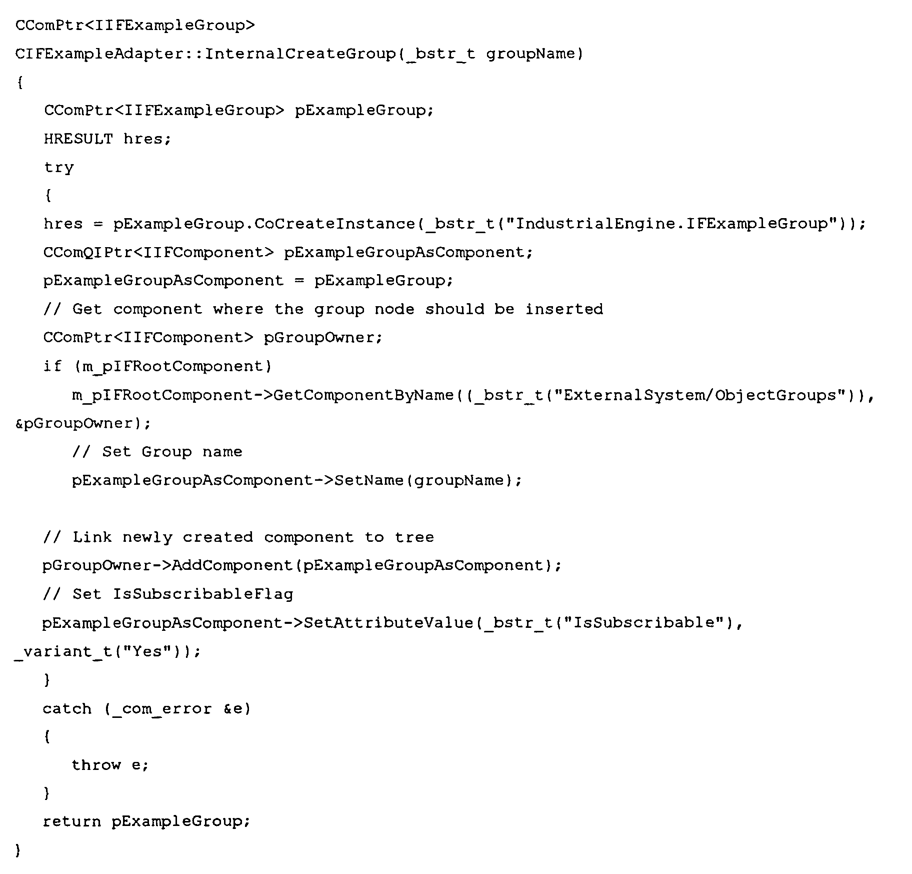

In order to publish an object for subscription, it is inserted it into an Adapter's object tree and declared as subscribable. In an Adapter's header file, a new subscribable component is declared as follows.

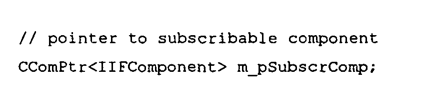

A component is initialized and declared as subscribable by setting the IsSubscribable attribute. This is then added to the external system's object space of an Adapter as follows.

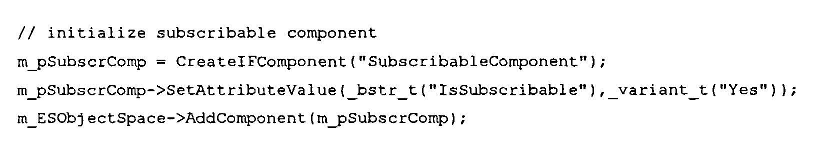

The subscribable component is then released as follows.

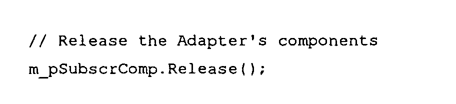

In an Adapter's header file, the variable used by Framework's Server is declared to notify all subscribers.

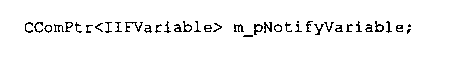

In the FinalConstruct method of an Adapter's CPP file, this variable is initialized. Its value is set to the exact path name of the subscribable component beginning under the Adapter's root node. It is then added to the external system's object space of an Adapter or wherever the user prefers as follows.

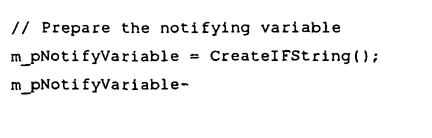

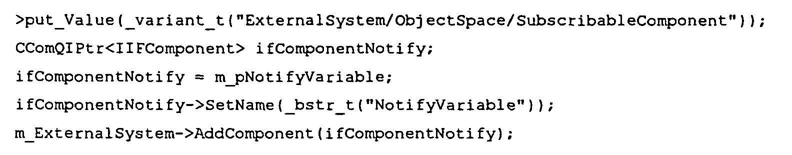

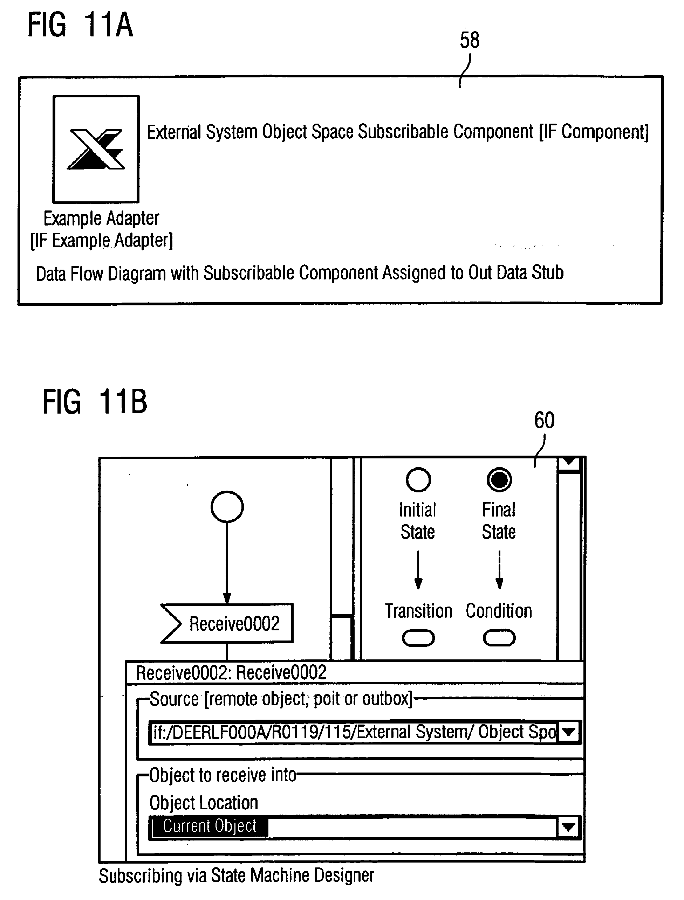

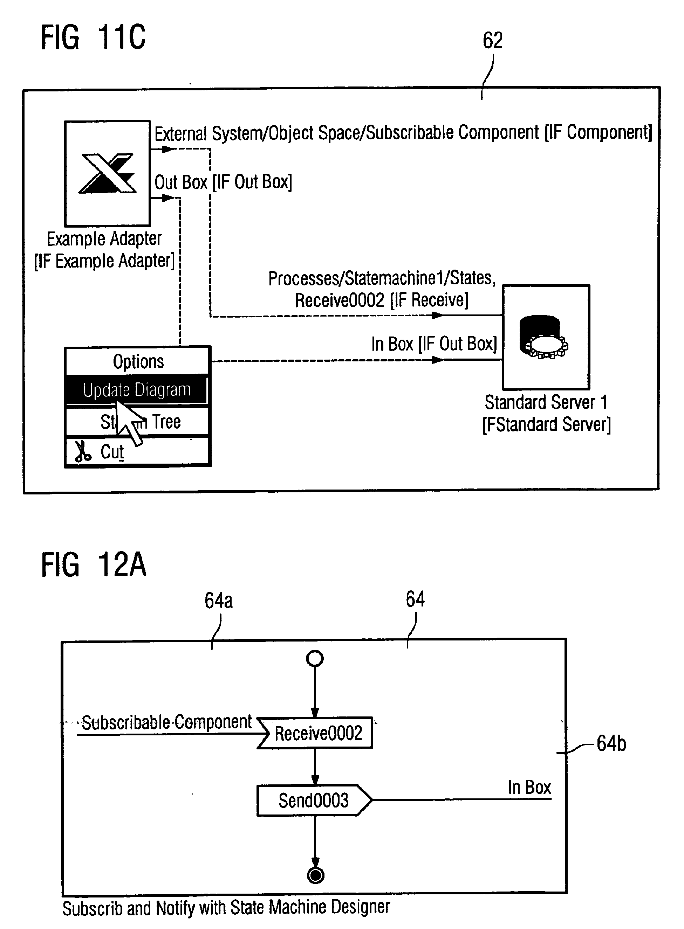

A subscribable object can be assigned to an OutPort in the Data Flow Diagram using Workbench as follows. In the ClassView pane of Visual Studio the user can see the new members. In the Global/Local Tree of Workbench, the user can see an new components where the user has inserted them. In the Data Flow Diagram of Workbench, the user can now assign the subscribable component to an OutDataStub. Draw an Adapter from the Global/Local Tree on the Data Flow Diagram. Click SubscribableComponent in the Global/Local Tree. Draw an OutDataStub on the Adapter in the Data Flow Diagram. The resulting drawing 58 is shown in Figure 11a, for example.

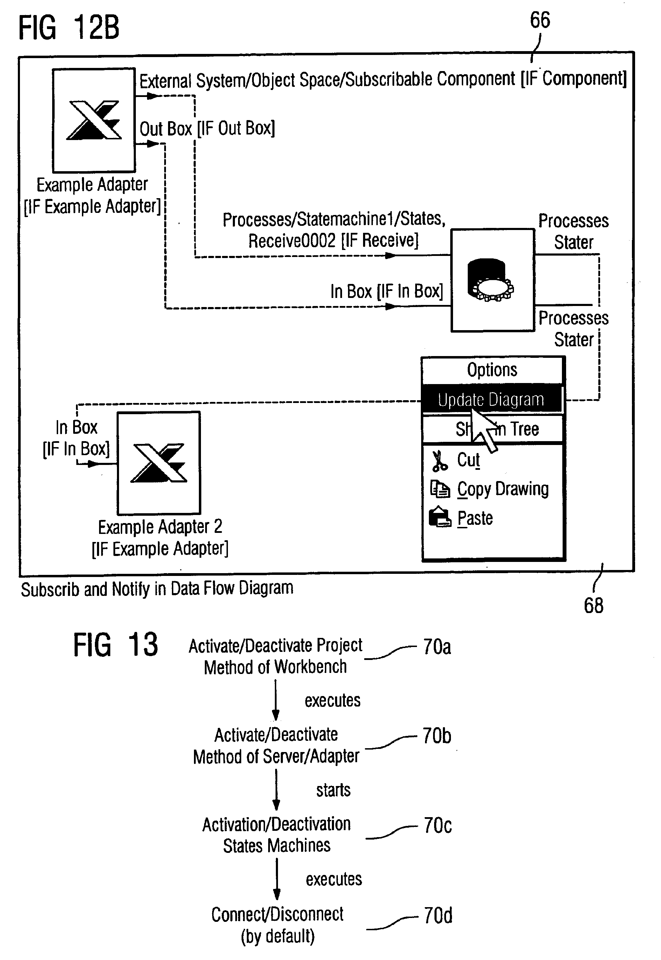

Normally, subscription to an object is performed during workflow modeling, i.e., rather than part of implementing an Adapter. In Figure 11b, there is a StateMachine Diagram 60 that was created below an IF Standard Server. The snapshot shows the instant in which the subscribable component of the ExampleAdapter is drawn as a source in a Receive dialog box. The target is the Current Object of the State Machine. The results of this subscription can also be seen in the Data Flow Diagram 62 of Fig. 12c. The user can view this Data Flow Diagram if he/she inserts the ExampleAdapter and the StandardServer and select Update Diagram according to the GUI of the present invention.

The general operation of the Workbench has already been described. The method of inserting an Adapter into the Workbench for editing and operation will now be addressed. o insert a new Adapter, the first step is to select the appropriate Catalog folder and deselect the read-only property, as the user can only edit the catalog if it is not read-only. Then, the user selects a new Adapter in the Catalog view in the Workbench. From the Workbench, the user chooses to Insert an Adapter by selecting Insert. The Workbench provides *an Insert Component dialog box.* In the dialog box, the user then selects IFComponent and insert an Adapter's (or component's) registered name. The user can find the registered name of an Adapter or component in the computer's registry. Now the user can use the Adapter or component like any other Adapter or component, already included in the catalog.

Thus, with the Adapter of the present invention, there is provided universal integration of applications within the context of a Framework through which connectivity to the applications is automatically established, maintained, and easily engineered. With the Workbench and Adapter Wizard, there is additionally provided an Interface by which the Adapters are easily modeled, created and edited.

In addition to the embodiments of the aspects of the present invention described above, those of skill in the art will be able to arrive at a variety of other arrangements and steps which, if not explicitly described in this document, nevertheless embody the principles of the invention and fall within the scope of the appended claims. For example, the ordering of method steps is not necessarily fixed, but may be capable of being modified without departing from the scope and spirit of the present invention.

## Claims

1. A method for universally integrating applications to a Framework, comprising the steps of:
mapping an application domain model, which comprises external application data, application functions and objects, to the Framework; and
providing access to the mapped application data, functions and objects of the application domain model to other integrated applications and external clients thereby universally integrating applications to the Industrial Framework.

2. The method according to claim 1, wherein the step of mapping includes mapping of communication protocols used by applications into generic Framework protocols, thereby integrating applications at the protocol level.

3. The method according to claims 1, further comprising the step of publishing data, functions, objects and protocols to other integrated applications and external clients.

4. The method according to claim 3, wherein the step of publishing publishes in XML format.

5. The method of claim 4, such that any application and service written in any language on any operating system to use or subscribe everything published.

6. The method according to claim 3, further comprising the step of exposing COM Automation compatible interfaces for published data, functions, objects and protocols.

7. The method according to claim 6, further comprising the step of extending the exposed functionality using scripts.

8. The method according to claim 6, further comprising the step of accessing the exposed functionality from late binding client applications.

9. The method according to claim 1, further comprising the step of providing methods for connecting and disconnecting to the application.

10. The method according to claim 1, further comprising the step of providing automatic reconnection in case of communication failure.

11. The method according to claim 1, further comprising the step of adding and/or changing functionality of the integrated application via scripts.

12. The method according to claim 1, further comprising the step of providing an event source that passes changes affecting the data to a connected application.

13. The method according to claim 1, further comprising the step of providing an event sink of the application that passes data changed in the connected application into the Framework objects.

14. The method according to claim 1, further comprising the step of establishing connection points capable of making calls to the application and fire events.

15. The method according to claim 1, further comprising the step of publishing a data access server's methods.

16. The method according to claim 1, further comprising the step of publishing an object of the application for subscription.

17. A computer readable product comprising computer readable encoded data that is capable of driving a computer processor in accordance with the method of claim 1.

18. An Adapter apparatus universally integrating applications to an Industrial Framework, comprising:
a mapper for mapping an application domain model, which comprises external application data, functions and objects, to the Framework; and
an interface for providing access to the mapped application data and function of the application domain model to other integrated applications and external clients, thereby universally integrating applications to the Framework.

19. The apparatus of claim18 further comprising a toolkit for supporting the development of Adapters including libraries comprising reusable starter source files for creating the Adapter in which coding common to the applications is previously provided; and

20. The apparatus of claim18, further comprising an Adapter base including a common base of applications for mapping and interfacing the application to the Framework.

21. The apparatus of claim 18, further comprising an Adapter wizard that automatically creates a project with a set of starter source files for an easy development of the Adapter in which coding common to the applications is previously provided.
